# FASCICULE DE BREVET EUROPEEN

(11) **EP 1 078 806 B1**
(45) Date de publication et mention de la délivrance du brevet: **30.09.2009**
(21) Numéro de dépôt: 00402274.5
(22) Date de dépôt: 11.08.2000
(51) Int. Cl.: B60L 5/19, B60L 5/22

(54) **Véhicule pendulaire ferroviaire à pantographe et dispositif de contrependulation du pantographe**
Neigbares Schienenfahrzeug mit einem Stromabnehmer und Ausgleichvorrichtung des Stromabnehmers
Pendulum railway vehicle with pantograph and device for counterbalancing the pantograph

(30) Priorité: 26.08.1999 FR 9910816
(43) Date de publication de la demande: 28.02.2001
(73) Titulaire: A.N.F. INDUSTRIE, F-59154 Crespin (FR)
(72) Inventeur: van Berten, Philippe, 59990 Préseau (FR); Plaquin, Bernard, 59620 Aulnoye-Aymeries (FR)
(74) Mandataire: Broydé, Marc

(56) Documents cités:
- EP-A- 0 436 993
- EP-A- 0 785 100
- WO-A-97/03858
- DE-A- 19 615 341
- DE-C- 19 618 747
- PATENT ABSTRACTS OF JAPAN vol. 1997, no. 06, 30 juin 1997 (1997-06-30) -& JP 09 046807 A (KAYABA IND CO LTD;EAST JAPAN RAILWAY CO; TOKYU CAR CORP), 14 février 1997 (1997-02-14)

## Description

La présente invention concerne un véhicule ferroviaire électrique pendulaire.

Afin d'accroître la vitesse des trains sans dégrader le confort des voyageurs et sans avoir recours à des voies spécifiques à la grande vitesse, les constructeurs proposent des véhicules ferroviaires pendulaires empruntant les réseaux existants. Dans les courbes, la caisse de ces véhicules a la particularité de s'incliner par rapport aux bogies pour compenser l'insuffisance de dévers de la voie engendrée par l'augmentation de la vitesse. Ainsi le voyageur ne ressent plus que très faiblement l'accélération centrifuge. L'inclinaison ou pendulation de la caisse est obtenue le plus souvent par des vérins interposés entre la caisse et le bogie et commandés par des signaux fournis par un ordinateur de bord recueillant et analysant des informations reçues par des capteurs installés dans le véhicule.

Lorsque de tels véhicules sont équipés de pantographes, celui-ci ne peut pas rester fixe par rapport à la caisse sans risquer de perdre le contact avec la caténaire, ou de sortir du gabarit limite imposé par le réseau (avec risque de destruction de la caténaire ou de l'archet de pantographe).

Il existe plusieurs techniques permettant de compenser les déplacements du pantographe.

Une première technique, illustrée par le document WO 97/03858, consiste à réaliser une ossature métallique rigide directement fixée sur le bogie, remontant jusqu'au niveau de la toiture du véhicule, et sur laquelle est monté le pantographe. Cette solution a l'avantage de présenter une grande fiabilité, le pantographe solidaire du bogie étant indépendant de la caisse. Par contre, elle présente l'inconvénient de devoir fabriquer une caisse particulière permettant des débattements relatifs entre l'ossature support de pantographe et la caisse elle-même, allant dans le sens d'une réduction des espaces disponibles pour les voyageurs en extrémité de véhicule. Une telle solution n'est de plus pas compatible avec l'adaptation à des véhicules existants.

Une deuxième technique consiste à monter le pantographe sur un support mobile transversalement et inclinable par rapport à la caisse, et à déplacer et à incliner le support grâce à un dispositif de contrependulation en fonction d'informations relatives à l'inclinaison de caisse reçues d'un dispositif de commande, le déplacement et l'inclinaison du support maintenant ainsi le pantographe dans son gabarit vertical normal.

Pour permettre à la fois la mobilité transversale et l'inclinaison du support, il peut être monté sur une glissière courbe (WO 97 39911 ou EP 0 436 993) ou sur un système de plateau articulé par des biellettes (EP 0 785 100).

Selon la solution illustrée par le document WO 97 39911, le dispositif de contrependulation est formé par une liaison par câbles entre le bogie et le pantographe, en passant par des renvois sur des poulies solidaires de la caisse. Cette solution a l'avantage d'être extrêmement simple et peu coûteuse, mais présente l'inconvénient de ne pas laisser le pantographe en position fixe par rapport au bogie, ce qui la rend difficilement exploitable. Par ailleurs, elle laisse la possibilité de transmission sans filtrage des moindres déplacements caisse/bogie (donnant en exploitation un pantographe en perpétuel mouvement de translation), et provoque des tensions importantes dans les câbles lors de ressauts de caisse (pouvant entraîner des ruptures et des problèmes de grippage au niveau des poulies).

Dans une autre technique, illustrée par exemple par le document EP 0 785 100, le dispositif de contrependulation comprend un dispositif d'actionnement du pantographe (électrique, pneumatique ou hydraulique) agissant en fonction d'informations électriques venant d'une électronique embarquée, celle-ci recevant des signaux de différents capteurs placés sur le bogie et en caisse (gyroscopes, accéléromètres, capteurs de vitesse). Ces informations, filtrées et traitées, pilotent le dispositif de contrependulation. Cette solution a l'avantage de transmettre des déplacements pantographe/caisse filtrés et maîtrisés par rapport aux déplacements caisse/bogie. Elle présente toutefois l'inconvénient d'avoir un temps de réponse du pantographe parfois incompatible avec la grande vitesse, et de plus on préférera avantageusement utiliser les signaux issus de la commande de pendulation sans avoir à doubler certains équipements électroniques. La solution peut aussi s'avérer, sans précautions particulières, sensible à des perturbations électromagnétiques liées à la proximité de la caténaire, risquant d'entraîner la perte de contrôle du pantographe. La solution est dans l'ensemble coûteuse.

Le document EP 0 436 993 décrit un pantographe monté sur une structure à glissière courbe et déplacé par un vérin hydraulique à double effet commandé par un circuit hydraulique dépendant du circuit des vérins d'inclinaison de caisse. Cette solution présente l'avantage de pouvoir utiliser un dispositif de commande entièrement hydraulique en liaison avec les vérins hydrauliques de caisse. Cependant, les vérins d'inclinaison de caisse, disposés généralement latéralement au bogie et à la caisse dans une position légèrement inclinée par rapport à la verticale, ont, pour un angle de pendulation de caisse donné, des courses rentrantes et sortantes différentes ; il en résulte des signaux de pression incompatibles des deux côtés du vérin à double effet et un risque de forçage, voire de rupture au niveau des tiges et de leur liaison avec le pantographe. La solution qui consiste à n'utiliser qu'un seul vérin maître de caisse et un seul vérin esclave de pantographe, illustrée par le document WO 97/43139, n'est pas suffisamment fiable pour être exploitée et les déplacements du pantographe sur un côté du véhicule sont différents dans ce cas des déplacements sur l'autre côté. Une autre solution consisterait à introduire un accumulateur hydraulique dans chacun des circuits liant les vérins de caisse aux vérins de pantographe pour absorber les forçages. Elle obligerait à travailler avec une forte pression dans les circuits pour ne pas diminuer les temps de réponse et entraînerait soit une perte de fiabilité engendrée par des risques de fuite, soit un surcoût produit par l'utilisation de matériels spéciaux fonctionnant sous haute pression.

La présente invention a pour but de remédier aux inconvénients précités et de proposer un dispositif simple et fiable de contrependulation d'un pantographe pour un véhicule électrique pendulaire.

L'invention atteint son but grâce à un véhicule du type général connu par le document WO 97/43139, c'est-à-dire un véhicule ferroviaire pendulaire comprenant au moins un bogie supportant de manière pendulaire une caisse dont le toit supporte un pantographe par l'intermédiaire d'un dispositif de contrependulation comprenant un plateau mobile relié à un ensemble de glissières et un dispositif de vérins de contrependulation destiné à incliner le plateau par rapport au toit en fonction d'informations relatives à l'inclinaison de caisse reçues d'un dispositif de commande, caractérisé en ce que le dispositif de contrependulation est constitué par un ensemble de deux vérins esclaves parallèles opposés interposé entre le plateau et la caisse, en ce que le dispositif de commande est constitué par un ensemble de deux vérins maîtres parallèles opposés interposés entre la caisse et le bogie, et en ce qu'un système de réplique reproduit dans chaque vérin esclave le mouvement d'un vérin maître associé de manière à obtenir la contrependulation recherchée.

Les vérins maîtres et esclaves étant ainsi parallèles (et de préférence colinéaires) et opposés, il est possible de les disposer de manière que la course rentrante d'un vérin maître ou d'un vérin esclave de chaque paire soit équivalente à la course sortante respectivement de l'autre vérin maître ou vérin esclave, ce qui permet un fonctionnement du dispositif de contrependulation sans risque de forçage ou de rupture au niveau des vérins et sans être obligé de travailler avec des circuits à haute pression hydraulique. De plus, les vérins esclaves sont associés de manière que la sortie de l'un force la rentrée de l'autre et vice-versa.

La paire de vérins esclaves peut constituer un vérin unique à double effet, ce qui facilite le montage.

Avantageusement, le système de réplique est un copieur hydraulique à deux branches reliant chacun des vérins maîtres à son vérin esclave associé.

Avantageusement, l'ensemble de glissières associé au plateau est constitué par trois glissières, dont deux sont inclinées symétriquement, d'un côté du plateau, et l'autre est horizontale, de l'autre côté du plateau.

Le centre de rotation du plateau est dépendant de l'inclinaison des deux glissières disposées sur un des côtés du plateau ; le troisième étant horizontale, peut recevoir avantageusement le mouvement horizontal des vérins esclaves.

L'amplitude de déplacement horizontal du plateau et donc son mouvement angulaire, est réglable par ailleurs par un bras de levier reliant un point fixe de la caisse, le point milieu des vérins esclaves et le point d'entraînement du plateau.

Il est donc possible d'adapter l'angulation du pantographe en fonction de la géométrie de caisse et du bogie.

De préférence, il est prévu au moins un moyen de verrouillage du plateau articulé en position centrale, qui est réalisé par des vérins pneumatiques qui appliquent sur une butée centrale un doigt solidaire du plateau.

Il est aussi avantageusement prévu un moyen de repérage de la position centrale du plateau articulé, ainsi que des moyens de rappel du plateau en position centrale. Ce dernier est avantageusement réalisé par les mêmes vérins pneumatiques vus précédemment.

Le système comprend aussi de préférence des moyens d'équilibrage de la pression hydraulique entre les circuits de liaison hydraulique reliant chaque vérin maître et le vérin esclave associé. En cas d'un défaut de centrage du pantographe, les moyens de repérage commandent aux moyens d'équilibrage d'égaliser les pressions hydrauliques dans les circuits de liaison hydraulique, les moyens de rappel pouvant alors recentrer le pantographe.

D'autres avantages et caractéristiques de l'invention ressortiront de la description suivante. On se référera aux dessins schématiques annexés sur lesquels :

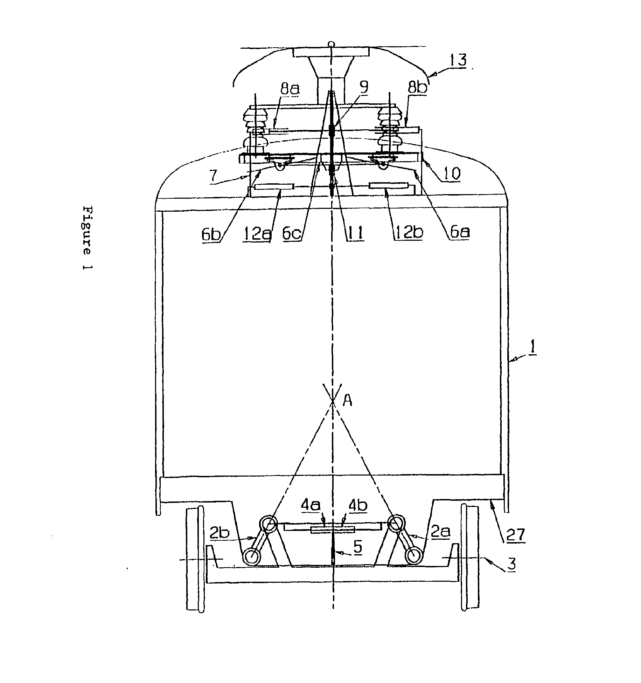

la figure 1 est une vue schématique en coupe transversale d'un véhicule électrique comportant un dispositif de contrependulation selon l'invention, la caisse étant verticale,
la figure 2 représente le principe des circuits hydrauliques utilisés,

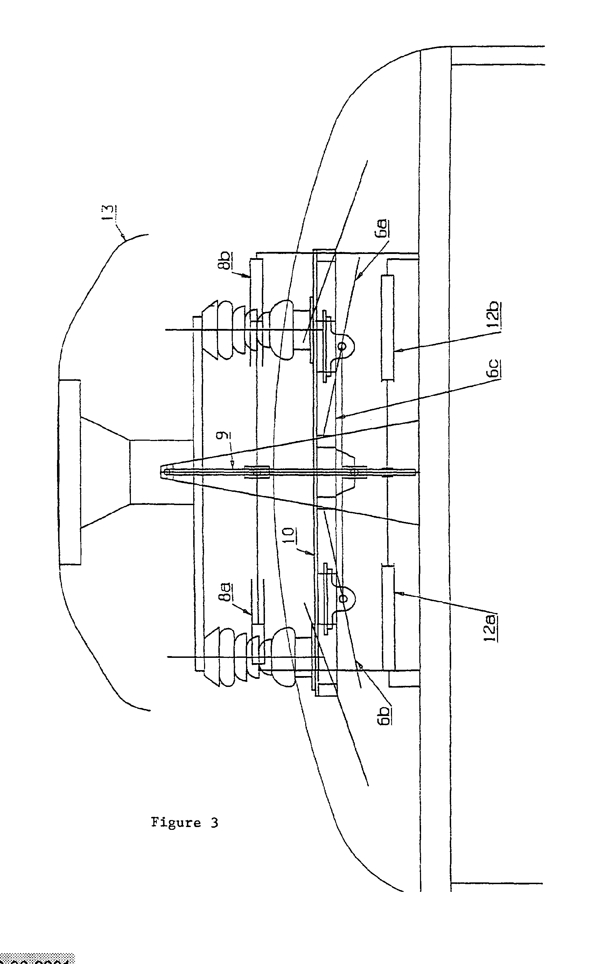

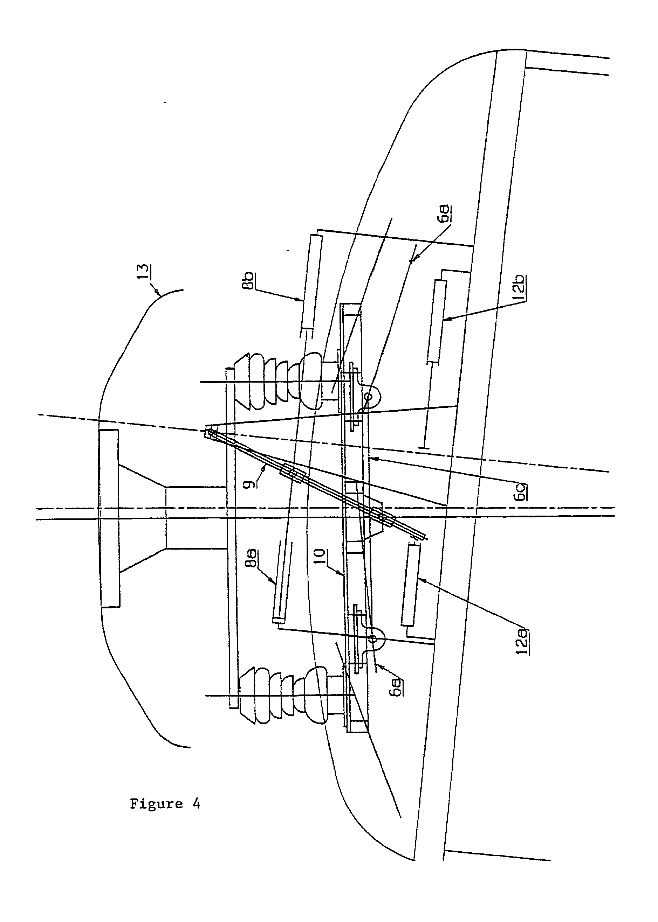

les figures 3 et 4 représentent le détail du pantographe et du haut de caisse dans les positions respectives d'équilibre et de contrependulation.

La caisse 1 est reliée au bogie 3 par deux bielles inclinées 2a et 2b déterminant un centre de rotation instantané A de la caisse.

Un vérin hydraulique non représenté assure la pendulation de la caisse par rapport au bogie.

Les vérins maîtres 4a et 4b colinéaires sont mus horizontalement par un doigt 5 solidaire de la caisse.

Sur la toiture de la caisse 1 sont disposés 2 glissières inclinées 6a et 6b et une glissière horizontale 6c ; à ces glissières sont liés des coulisseaux solidaires par des chapes au plateau 10 porte pantographe 13.

Sur un châssis 7 posé sur la caisse 1, les vérins esclaves 8a et 8b sont fixés de façon colinéaire et entraînent une bielle 9 qui entraîne elle-même le plateau 10 par l'intermédiaire d'un coulisseau 11.

Deux vérins pneumatiques 12a et 12b permettent de ramener et de verrouiller le plateau 10 en position centrale si nécessaire.

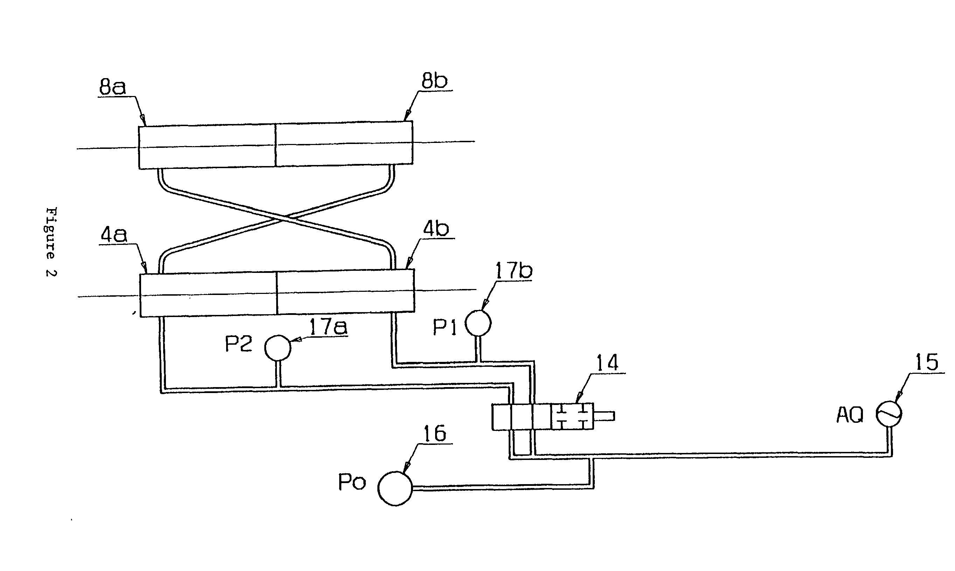

La figure 2 montre les principes hydrauliques :

Les vérins maîtres 4a et 4b sont reliés aux vérins 8a et 8b en ayant croisé leurs chambres.

Une électrovalve permet de remplir les circuits et d'opérer un équilibrage des pressions. Un accumulateur 15 assure la pression d'alimentation.

Un manostat 16 s'assure que la pression est supérieure à un minimum, sinon il signale un défaut et provoque la mise en sécurité du système (baissé du pantographe).

Les manostats 17a et 17b vérifient que la pression dans les vérins ne dépasse pas un certain seuil.

### Fonctionnement :

Les positions zéro de la caisse et du pantographe sont repérées par des détecteurs de position (par exemple des contacts électriques).

Si le détecteur de zéro du pantographe n'est pas activé alors que celui de la caisse est à zéro, il y a une remise à l'équilibre des circuits par l'activation de l'électrovalve 14 et un recentrage provoqué par la sortie des vérins pneumatiques sur leur butée.

Quand les positions zéro sont simultanées, l'électrovalve 14 isole les circuits d'équilibrage ; le système est prêt à fonctionner.

Quand il y a un déplacement des vérins maîtres 4a et 4b, les vérins esclaves se déplacent de la même longueur et provoque la pendulation du plateau 10.

Si un blocage mécanique empêche le plateau de penduler, la pression montre dans un circuit et le manostat 17a ou 17b détecte le défaut et active l'électrovalve d'équilibrage et provoque simultanément le recentrage du plateau par les vérins pneumatiques 12 a et 12b ainsi que le baissé du pantographe.

## Revendications

1. Véhicule ferroviaire pendulaire comprenant au moins un bogie (3) supportant de manière pendulaire une caisse (1) dont le toit supporte un pantographe (13) par l'intermédiaire d'un dispositif de contrependulation comprenant un plateau mobile (10) supporté par des glissières (6a, 6b, 6c) et un dispositif de vérins de contrependulation (8a, 8b) destiné à incliner le plateau (10) par rapport au toit en fonction d' informations relatives à l'inclinaison de caisse reçues d'un dispositif de commande, **caractérisé en ce que** le dispositif de contrependulation est constitué par un ensemble de deux vérins esclaves parallèles opposés (8a, 8b) interposés entre le plateau mobile (10) et la caisse (1), **en ce que** le dispositif de commande est constitué par un ensemble de deux vérins maîtres parallèles opposés (4a, 4b) interposés entre la caisse (1) et le bogie (3), et **en ce qu'**un système de réplique reproduit dans chaque vérin esclave le mouvement d'un vérin maître associé de manière à obtenir la contrependulation recherchée.

2. Véhicule selon la revendication 1, **caractérisé en ce que** les vérins parallèles opposés (4, 8) sont colinéaires.

3. Véhicule selon l'une quelconque des revendications 1 ou 2, **caractérisé en ce que** les vérins esclaves constituent un vérin double-effet (8).

4. Véhicule selon l'une quelconque des revendications précédentes, **caractérisé en ce que** le système de réplique est un copieur hydraulique à deux branches reliant chacun des vérins maîtres (4) à son vérin esclave associé (8).

5. Véhicule selon l'une quelconque des revendications précédentes, **caractérisé en ce que** le plateau mobile (10) glisse sur deux glissières inclinées (6a, 6b) et une glissière horizontale (6c).

6. Véhicule selon la revendication 5, **caractérisé en ce que** la glissière horizontale (6c) reçoit le mouvement horizontal des vérins esclaves (8a, 8b).

7. Véhicule selon l'une quelconque des revendications 5 ou 6, **caractérisé en ce qu'**un bras de levier (9) relie un point fixe de la caisse, le point milieu des vérins esclaves et le point d'entraînement (11) du plateau.

8. Véhicule selon l'une quelconque des revendications précédentes, **caractérisé par** au moins un moyen de verrouillage pneumatique (12) du plateau (10) en position centrale.

9. Véhicule selon l'une quelconque des revendications précédentes, **caractérisé par** un moyen de repérage de la position centrale du plateau (16).

10. Véhicule selon l'une quelconque des revendications précédentes, **caractérisé par** des moyens de rappel (12) du plateau en position centrale.

## Claims

1. A pendulum railway vehicle including at least one bogie (3) providing a pendular support to a body (1), the roof of which supports a pantograph (13) through a counterbalancing device including a mobile platform (10) supported by slides (6a, 6b, 6c) and a counterbalancing jack system (8a, 8b) intended for inclining the platform (10) with respect to the roof according to information on the body angle received from a control device, **characterized in that** the counterbalancing device is composed of a set of two opposite parallel slave jacks (8a, 8b) positioned between the mobile platform (10) and the body (1), **in that** the control device is composed of a set of two opposite parallel master jacks (4a, 4b) positioned between the body (1) and the bogie (3), and **in that** a reproduction system reproduces in each slave jack the motion of a master jack associated therewith so as to obtain the desired counterbalancing.

2. A vehicle according to claim 1, **characterized in that** the opposite parallel jacks (4, 8) are collinear.

3. A vehicle according to any one of claims 1 or 2, **characterized in that** the slave jacks form a double-acting jack.

4. A vehicle according to any one of the preceding claims, **characterized in that** the reproduction system is a hydraulic copying device with two branches connecting each of the master jacks (4) to the slave jack (8) associated therewith.

5. A vehicle according to any one of the preceding claims, **characterized in that** the mobile platform (10) slides on two sloping slides (6a, 6B) and a horizontal slide (6c).

6. A vehicle according to claim 5, **characterized in that** the horizontal slide (6c) receives the horizontal motion of the slave jacks (8a, 8b).

7. A vehicle according to any one of claims 5 or 6, **characterized in that** a lever arm (9) connects a fixed point on the body, the midpoint on the slave jacks and the driving point (11) on the platform.

8. A vehicle according to any one of the preceding claims, **characterized by** at least pneumatic means (12) for locking the platform (10) in the central position thereof.

9. A vehicle according to any one of the preceding claims, **characterized by** means for locating the central position of the platform (16).

10. A vehicle according to any one of the preceding claims, **characterized by** means (12) for returning the central platform to the central position thereof.

## Patentansprüche

1. Neigbares Schienenfahrzeug, das mindestens ein Fahrgestell (3) umfasst, das auf neigbare Weise einen Wagenkasten (1) trägt, dessen Dach einen Stromabnehmer (13) mittels einer Gegenneigungsvorrichtung trägt, die ein bewegliches Plateau (10), das von Gleitschienen (6a, 6b, 6c) getragen wird, und eine Vorrichtung von Gegenneigungszylindern (8a, 8b) umfasst, die dazu vorgesehen sind, das Plateau (10) im Verhältnis zum Dach in Abhängigkeit von Informationen zu neigen, die die Neigung des Wagenkastens betreffen und die von einer Steuervorrichtung empfangen wurden, **dadurch gekennzeichnet, dass** die Gegenneigungsvorrichtung aus einer Anordnung von zwei gegenüberliegenden, parallelen, untergeordneten Zylindern (8a, 8b) gebildet ist, die zwischen dem beweglichen Plateau (10) und dem Wagenkasten (1) angeordnet sind, dass die Steuervorrichtung aus einer Einheit von zwei gegenüberliegenden, parallelen, übergeordneten Zylindern (4a, 4b) gebildet ist, die zwischen dem Wagenkasten (1) und dem Fahrgestell (3) angeordnet sind, und dass ein Replizierungssystem in jedem untergeordneten Zylinder die Bewegung eines zugehörigen übergeordneten Zylinders derart reproduziert, dass die gewünschte Gegenneigung erzielt wird.

2. Fahrzeug nach Anspruch 1, **dadurch gekennzeichnet, dass** die gegenüberliegenden, parallelen Zylinder (4, 8) kollinear sind.

3. Fahrzeug nach einem der Ansprüche 1 oder 2, **dadurch gekennzeichnet, dass** die untergeordneten Zylinder einen doppelt wirkenden Zylinder (8) bilden.

4. Fahrzeug nach einem der vorhergehenden Ansprüche, **dadurch gekennzeichnet, dass** das Replizierungssystem eine hydraulische Kopiervorrichtung mit zwei Zweigen ist, die jeden der übergeordneten Zylinder (4) mit seinem zugehörigem untergeordneten Zylinder (8) verbinden.

5. Fahrzeug nach einem der vorhergehenden Ansprüche, **dadurch gekennzeichnet, dass** das bewegliche Plateau (10) auf zwei geneigten Gleitschienen (6a, 6b) und einer horizontalen Gleitschiene (6c) gleitet.

6. Fahrzeug nach Anspruch 5, **dadurch gekennzeichnet, dass** die horizontale Gleitschiene (6c) die Horizontalbewegung der untergeordneten Zylinder (8a, 8b) aufnimmt.

7. Fahrzeug nach einem der Ansprüche 5 oder 6, **dadurch gekennzeichnet, dass** ein Hebelarm (9) einen festen Punkt des Wagenkastens, den Mittelpunkt der untergeordneten Zylinder und den Antriebspunkt (11) des Plateaus verbindet.

8. Fahrzeug nach einem der vorhergehenden Ansprüche, **gekennzeichnet durch** mindestens ein Mittel zur pneumatischen Verriegelung (12) des Plateaus (10) in zentraler Stellung.

9. Fahrzeug nach einem der vorhergehenden Ansprüche, **gekennzeichnet durch** ein Mittel zur Erfassung der Mittenposition des Plateaus (16).

10. Fahrzeug nach einem der vorhergehenden Ansprüche, **gekennzeichnet durch** Mittel zur Rückstellung (12) des Plateaus in die Mittenposition .
